# FASCICULE DE BREVET EUROPEEN

(11) **EP 1 891 319 B1**
(45) Date de publication et mention de la délivrance du brevet: **03.11.2010**
(21) Numéro de dépôt: 05756837.0
(22) Date de dépôt: 16.06.2005
(51) Int. Cl.: F02M 21/06

(54) **REGULATEUR DE PRESSION DE GAZ, NOTAMMENT POUR MOTEUR A COMBUSTION**
GASDRUCKREGLER, INSBESONDERE FÜR EINEN VERBRENNUNGSMOTOR
GAS PRESSURE REGULATOR, IN PARTICULAR FOR A COMBUSTION ENGINE

(43) Date de publication de la demande: 27.02.2008
(73) Titulaire: LUXEMBOURG PATENT COMPANY S.A., 7440 Lintgen (LU)
(72) Inventeur: KREMER, Paul, L-7263 Walferdange (LU); RISSE, Claude, F-57310 Bertrange (FR); CASIER, Michaël, L-9841 Wahlhausen (LU)
(74) Mandataire: Lecomte, Didier
(86) Numéro de dépôt international: PCT/EP2005/052790
(87) Numéro de publication internationale: WO 2006/133736

(56) Documents cités:
- EP-A- 0 182 952
- EP-A- 0 611 266
- EP-A- 1 120 561
- EP-A1- 0 859 301
- US-A- 2 969 800
- US-B1- 6 328 054
- PATENT ABSTRACTS OF JAPAN vol. 1995, no. 01, 28 février 1995 (1995-02-28) & JP 06 299878 A (KUBOTA CORP), 25 octobre 1994 (1994-10-25)

## Description

La présente invention se rapporte à un régulateur de pression de gaz, en particulier pour alimenter un moteur à combustion interne par un carburant gazeux sous pression, cependant l'invention n'est pas limitée à cette application. Par exemple, le régulateur de pression de gaz peut aussi être utilisé pour la détente d'autres gaz comme l'hydrogène (pile à combustible), des gaz UHP (Ultra Haute Pureté) et des gaz corrosifs, cependant l'invention a été développée principalement pour les applications GNV (gaz naturel véhicule) ou CNG (compressed natural gas) dans le domaine automobile.

Les détendeurs GNV (ou CNG) utilisés couramment dans le domaine d'alimentation des moteurs à combustion interne sont des détendeurs de conception standard à étage double ou simple avec des clapets dans la haute pression. Ces détendeurs ont beaucoup de pièces et sont donc complexes, ils ont des dimensions relativement élevées et sont chers à fabriquer.

Egalement connu dans l'étant de la technique est un détendeur GNV (ou CNG) simple étage avec le clapet dans la basse pression en vue de supprimer les problèmes dus à la détente Joules Thomson (chute de température due à la détente du gaz). Dans ce détendeur la membrane en élastomère utilisée généralement dans les détendeurs classiques est remplacée par un soufflet métallique, par exemple en inox. Ce détendeur est moins sensible aux problèmes de froid qui fait vieillir les membranes en élastomère. Il reste simplement un petit joint qui assure l'étanchéité au niveau de la tige du piston. Dans un tel détendeur l'entrée et la sortie du gaz sont disposées sur le même axe, ce qui permet de minimiser les pertes de charge. Le détendeur a une taille réduite qui permet de limiter les échanges thermiques entre les gaz et les composants du détendeur. Ce détendeur est simple, a peu de pièces et peut être fabriqué à faibles coûts.

Le document de brevet EP 0 611 266 A1 divulgue un régulateur de pression de gaz, notamment pour moteur à combustion, selon le préambule de la revendication 1.

Le document de brevet JP 6 299878 divulgue un dispositif de régulation de débit de carburant gazeux dans un dispositif d'alimentation en mélange air-carburant d'un moteur à combustion.

Alors que les détendeurs connus offrent un fonctionnement satisfaisant, des améliorations sont constamment recherchées, et en particulier l'augmentation du débit de gaz, notamment pour l'application automobile.

Le régulateur de pression de gaz selon l'invention, tel que défini dans la première revendication, utilise le flux du gaz dans l'orifice de sortie basse pression pour aspirer le gaz contenu dans la chambre basse pression. Ceci a pour effet d'augmenter le débit de gaz, donc de limiter la chute de pression lors des variations rapides de demande de débit. Dans l'application automobile visée ceci correspond à une forte accélération. L'aspiration va avoir tendance à diminuer la pression dans la chambre basse pression du détendeur, ce dernier aura tendance à s'ouvrir donc à accroître le débit pour limiter la chute de pression.

L'avantage du régulateur selon l'invention est de stabiliser la pression dynamique. En effet, dans une application automobile, la gestion électronique calcule à chaque rotation du moteur la quantité de gaz à introduire dans les cylindres en fonction de différents paramètres. Plus on accélère et plus il faut de gaz. Pour introduire le plus de gaz possible il faut ouvrir l'injecteur longtemps. Mais ce temps ne peut pas dépasser une certaine valeur qui dépend de la vitesse de rotation du moteur.

Pour stabiliser la pression de sortie dynamique du détendeur (et réduire les temps de réaction) le débit de sortie du détendeur est augmenté, à l'aide du principe de Venturi pour avoir virtuellement un débit de sortie supérieur au débit d'entrée dans la chambre de détente du détendeur. Pour exemple la surface de passage au niveau du piston peut être égale à 14,51 mm², et la surface de sortie engendrée par le système Venturi est par exemple 12,56 mm² au niveau de l'orifice de sortie principale et 4 fois 3,14 mm², soit 12,56 mm², pour les passages secondaires.

Ceci a pour effet de mettre la chambre basse pression en dépression par rapport à la pression dynamique initiale, de ce fait le détendeur s'ouvre pour compenser cet effet.

Ce dispositif permet de travailler avec une pression dynamique au ralenti plus faible. Ceci est un avantage pour les systèmes qui utilisent des injecteurs d'une technologie qui ne supporte pas les pressions statiques importantes. En effet, si nous travaillons avec une pression dynamique faible, la pression statique lors des coupures de l'injection en phase de décélération sera plus faible.

Enfin, pour finir, l'avantage de ce système est qu'il est très facile à mettre en oeuvre car avec les détendeurs du cité ci-avant (avec soufflet métallique et clapet dans la basse pression) il est nécessaire de modifier qu'une seule pièce.

Selon une autre caractéristique du régulateur de pression de gaz selon l'invention le joint d'étanchéité élastomère torique disposé entre la tige du piston et le corps du détendeur (support raccord haute pression) est remplacé par un soufflet métallique par exemple en inox soudé au laser. Cette caractéristique permet de s'acquitter des problèmes de froid dus à la détente Joules Thomson et il sera même possible de faire fonctionner le détendeur à des températures cryogéniques. Des étanchéités de l'ordre de 10-9 mbar 1/sec. peuvent être atteintes qui sont exigées dans les applications Ultra Haute Pureté (UHP). En plus d'apporter une solution au problème de froid et d'étanchéité, cette technologie permet une application aux gaz corrosifs car beaucoup de matériaux sont possibles pour la fabrication des soufflets et des pièces du détendeur. Pour les gaz faiblement corrosifs des soufflets en acier inoxydable austénique et pour les gaz plus corrosifs des alliages en nickel peuvent être utlisés.

La technologie actuelle utilise des joints élastomères ce qui limite fortement le domaine d'application. De plus, les joints vieillissent très mal et en général un élastomère n'a pas une durée de vie supérieure à 10 ans. En effet, cette technologie ne peut pas être utilisée pour des gaz UHP car le niveau d'étanchéité est de l'ordre de 10-3 mbar 1/sec. Les élastomères ne supportent pas les importantes variations de température car la répétition de ces effets ont tendance à les vieillir plus rapidement. La matière élastomère perd ses propriétés mécaniques avec pour conséquence des déformations irréversibles et des fissurations qui modifient le comportement du détendeur. L'autre avantage non négligeable est le niveau d'étanchéité. Ceci permet d'entrevoir le positionnement de cet appareil directement dans une enceinte sous pression pour l'application hydrogène qui prévoit des pressions allant jusqu'à 700 bar.

Avec le régulateur de pression de gaz selon l'invention une moins forte diminution de la température au niveau du siège de piston a été constatée. Alors que les raisons pour cette moins forte diminution de la température ne sont pas totalement comprises à ce moment, l'on pense que la moins forte diminution est due à l'alignement de l'orifice d'entrée basse pression avec l'orifice de sortie haute pression et le passage du piston ainsi que le système Venturi ce qui favorise un temps de demeure très court des gaz dans le détendeur, donc un très faible échange de chaleur avec le système extérieur, et il a été constaté que le régulateur de pression de gaz peut fonctionner pour les applications GNV (ou CNG) sans utiliser le circuit de refroidissement du moteur pour réchauffer le régulateur, un procédé qui est couramment utilisé dans la technique antérieure. En conséquence, le joint torique en élastomère peut être maintenu au niveau de la tige de piston et du corps du détendeur pour l'application automobile, ou il peut être remplacé par le deuxième soufflet interne cité ci-avant pour des applications cryogéniques ou autres, telles que les applications UHP ou les gaz corrosifs demandant des étanchéités de 10-9 mbar 1/min.

D'autres caractéristiques avantageuses du régulateur de pression sont comprises dans les revendications dépendantes 2 à 14.

L'invention concerne aussi un détendeur à deux soufflets métalliques (revendications 15 et 16) et un procédé d'assemblage d'un sous-ensemble de ce détendeur à deux soufflets (revendications 17 à 19).

L'invention sera maintenant expliquée en plus grand détail en référence aux dessins annexés sur lesquels :
La figure 1 représente, en coupe longitudinale, un premier mode d'exécution du régulateur de pression de gaz selon l'invention ;
La figure 2 représente, en coupe longitudinale, un régulateur de gaz selon un deuxième mode d'exécution de l'invention, avec un détendeur à deux soufflets métalliques ; et
Les figures 3 à 5 représentent le procédé d'assemblage du sous-ensemble du détendeur comportant la tige de piston, le second soufflet et le corps du détendeur.

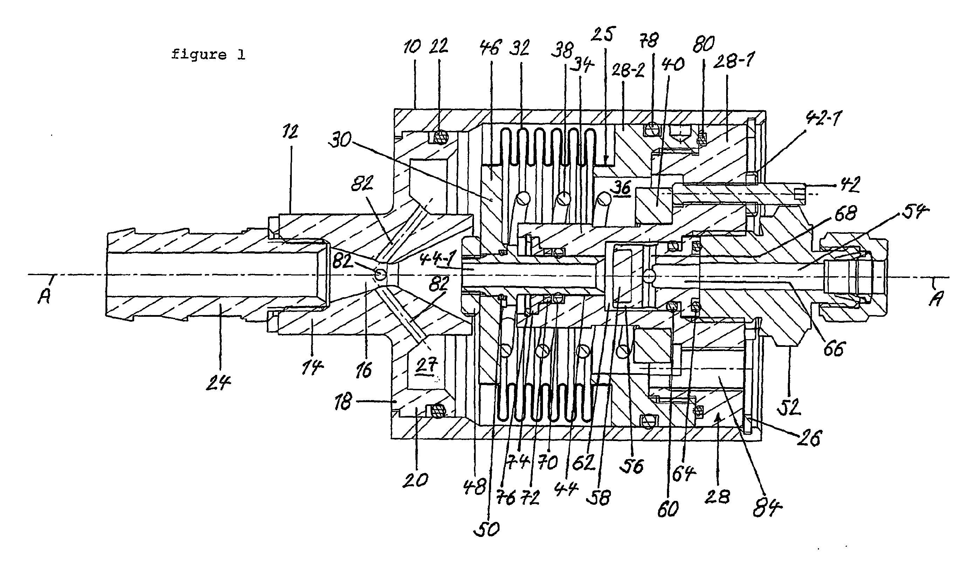

Comme représenté sur la figure 1, le régulateur de gaz selon l'invention comporte un boîtier 10 en forme d'une enveloppe annulaire cylindrique fermée à l'une de ses extrémités par une pièce ou paroi d'extrémité annulaire 12 engagée dans l'enveloppe annulaire 10 et pourvue d'une partie centrale 14 ayant un orifice de sortie basse pression 16, et d'un flasque radial 18 s'étendant vers l'extérieur de la partie centrale 14 et portent à son extrémité externe un rebord axial annulaire 20 pourvu d'une rainure annulaire dans sa surface externe dans laquelle un joint d'étanchéité 22 est disposé qui est en engagement étanche avec la surface cylindrique interne de l'enveloppe annulaire 10. Un raccord de sortie basse pression 24 est fixé à la partie centrale 14 et ce raccord 24 est pourvu d'un passage qui est en communication avec l'orifice de sortie basse pression 16.

Un détendeur, désigné en son ensemble par 25, est disposé dans l'enveloppe annulaire 10 et ce détendeur 25 est retenu dans l'enveloppe 10 par un anneau d'arrêt élastique 26 engagé dans une rainure circonférentielle pratiquée dans la surface cylindrique interne de l'enveloppe annulaire 10. Une chambre basse pression 27 est formée dans l'enveloppe annulaire 10 et délimitée entre cette enveloppe 10, la pièce d'extrémité 12 et le détendeur 25.

Le détendeur 25 et l'enveloppe circulaire 10 ont un axe longitudinal central commun A-A et l'orifice de sortie 16 est coaxial avec cet axe A-A. Le détendeur 25 a un corps de détendeur 28, un piston 30, un soufflet métallique 32 externe annulaire fixé de façon étanche, de préférence au rayon laser, de l'un côté au piston 30 et de l'autre côté au corps 28. Ce soufflet métallique 32, de préférence en inox, est cylindrique et permet un mouvement axial du piston 30 par rapport au corps 28. Le détendeur 25 est disposé dans l'enveloppe annulaire 10 avec le piston 30 faisant face vers la paroi d'extrémité 12 et disposé à proximité de l'ouverture d'entrée de l'orifice de sortie 16 alors que l'extrémité opposée de l'enveloppe circulaire 10 est fermée par le corps 28 qui est reçu par un ajustement coulissant dans l'intérieur de l'enveloppe annulaire 10 et retenu par l'anneau élastique 26 sans la présence d'un moyen de fixation quelconque entre le corps 28 et le boîtier 10. Le détendeur 25 est un détendeur unitaire autonome à installer dans le boîtier 10 et à enlever de celui en forme d'une unité indépendante encastrable et comportant, entre autres, le piston 30, le corps 28 et le soufflet 32. Le corps 28 consiste en deux parties, c'est-à-dire une première partie principale ou support raccord haute pression 28-1 et une deuxième partie ou support soufflet 28-2 fixée par un engagement fileté à la première partie 28-1. Les deux parties 28-1 et 28-2 sont reçues par un engagement coulissant dans l'enveloppe annulaire 10 et ont généralement le même diamètre externe. Une extrémité du soufflet 32 est fixée à la deuxième partie 28-2. La première partie 28-1 a un alésage longitudinal central à différents diamètres, coaxial à l'axe A-A, traversant la première partie 28-1 d'une extrémité à l'autre et débouchant à ces deux extrémités. La première partie 28-1 a sur son côté faisant face vers le piston 30 un prolongement axial 34 à diamètre externe réduit s'étendant vers le piston 30. La deuxième partie 28-2 est annulaire et elle est reçue autour du prolongement 34 avec un écartement radial entre le prolongement 34 et la deuxième partie 28-2 du corps 28.

Une chambre interne 36 est délimitée entre le corps du détendeur 28, le piston 30 et le soufflet cylindrique 32. Un ressort de compression hélicoïdal cylindrique 38 est disposé dans cette chambre 36 et l'une des extrémités de ce ressort 38 est en engagement avec le piston 30 alors que son autre extrémité s'appuie sur une bague de réglage 40 reçue par un ajustement coulissant sur une surface externe du prolongement 34 du corps 28 du détendeur. Plusieurs vis de réglage 42 espacées l'une de l'autre en direction circonférentielle autour de l'axe A-A, dont seulement une seule est représentée sur le dessin de la figure 1, sont vissées dans la partie principale 28-1 du corps 28 et portent contre la bague de réglage 40 pour permettre le réglage du détendeur, c'est-à-dire le réglage de la force du ressort 38. Des écrous de blocage 42-1 sont engagés sur les vis de réglage 42.

Le piston 30 est pourvu d'une tige de piston 44 reçue par un ajustement coulissant dans une partie à diamètre réduit de l'alésage longitudinal du corps 28. La tige de piston 44 est traversée d'une extrémité à l'autre d'un passage de gaz 44-1 axial central coaxial à l'axe A-A. Une tête de piston 46 est montée sur l'extrémité de la tige de piston 44 se trouvant à l'extérieur du prolongement 34 de la première partie 28-1 du corps 28. Cette tête de piston 30 est retenue par un écrou fileté 48 sur la tige de piston 44 et se trouve à proximité de l'extrémité d'entrée de l'orifice de sortie 16. Un joint d'étanchéité 50 est prévu entre la tige de piston 44 et la tête de piston 46.

Engagé dans l'extrémité opposée de plus grand diamètre de l'alésage central de la première partie 28-1 du corps 28 du détendeur 25 est un raccord haute pression 52 pourvu d'un orifice d'entrée haute pression 54. Le raccord 54 est vissé dans l'alésage central longitudinal et retient dans une partie à diamètre intermédiaire de l'alésage un siège de piston 56 pourvu d'une pastille d'étanchéité 58 coopérant avec la tige de piston 44. Le siège de piston 56 a une extrémité montée de façon étanche dans l'alésage longitudinal central et pourvue d'une rainure annulaire externe dans laquelle un joint d'étanchéité 60 est disposée en vue d'empêcher une fuite d'une chambre haute pression 62 formée à l'extrémité opposée du siège de piston 56 et autour d'une partie à diamètre réduit du siège de piston 58 vers l'extérieur par l'engagement fileté entre le raccord 52 et la partie principale 28-1 du corps 28 du détendeur 25. Une autre bague d'étanchéité 64 se trouve dans une rainure annulaire pratiquée dans la surface arrière radiale du siège de piston 56 en vue d'assurer l'engagement étanche entre le raccord 52 et le siège de piston 56. Le siège de piston 56 a en outre un alésage central 66 qui est en communication avec l'orifice d'entrée haute pression 54 de l'un côté et qui, de l'autre côté, est en communication avec quatre passages radiaux 68 débouchant dans la surface externe de la partie à diamètre réduit du siège de piston 58 et qui sont donc en communication avec la chambre haute pression 62.

Un moyen d'étanchéité est disposé dans le support raccord HP 28-1 du corps 28 et autour de la tige de piston 44 pour empêcher des fuites de gaz de la chambre haute pression 62 vers la chambre interne 36 par l'alésage central longitudinal autour de la tige de piston 44. Ce moyen d'étanchéité comporte un joint d'étanchéité torique 70, une bague d'appui 72 pour le joint d'étanchéité 70 ainsi qu'un anneau de retenue 74 pour la bague d'appui 72 et le joint d'étanchéité 70. Ces trois pièces sont maintenues dans un contre-alésage de l'alésage central longitudinal du corps 28 par une bague élastique 76 engagée dans une rainure annulaire interne pratiquée dans le contre-alésage. Le joint d'étanchéité 70 est dans ce mode d'exécution un joint en matière élastomère.

Il reste encore à mentionner qu'un autre joint d'étanchéité 78 est disposé dans une rainure pratiquée dans la surface externe de la seconde partie 28-2 du corps 28. Ce joint 78 est en engagement étanche avec la surface annulaire interne de l'enveloppe annulaire 10 pour empêcher des fuites de la chambre basse pression 27 autour du soufflet cylindrique 32 et entre la surface radiale externe du corps 28 et la surface interne de l'enveloppe 10 vers l'extérieur de celle-ci. Un joint d'étanchéité 80 est également prévu dans une rainure pratiquée dans une surface radiale de la première partie 28-1 du corps 28. Ce joint 80 est en engagement étanche avec une surface radiale de la seconde partie 28-2 du corps 28 pour empêcher des fuites de la chambre interne 36 entre ces deux parties du corps 28 et vers l'extérieur de l'enveloppe annulaire 10.

La tête 46 du piston 30 et la seconde partie 28-2 du corps 28 sont fabriquées d'une matière permettant le soudage du soufflet cylindrique en inox 32 au rayon laser à ces deux pièces.

Selon la présente invention l'orifice de sortie basse pression 16 a une forme convergente/divergente. L'extrémité d'entrée à grand diamètre de la partie convergente est en communication avec la chambre basse pression 27 et des passages d'aspiration secondaires 82 inclinés par rapport à l'axe longitudinal de la sortie basse pression (par exemple quatre) sont disposés autour de l'orifice 16 en des intervalles égaux. Ces passages 82, d'un côté, sont en communication avec la chambre basse pression 28 en des endroits séparés de l'orifice 16' et, de l'autre côté, débouchent dans l'orifice 16 à proximité de sa surface de passage minimale, de préférence juste derrière cette surface de passage minimale. Un seul passage 82 peut être suffisant. Dans la position ouverte du détendeur 25 le passage 44-1 de la tige de piston 44 place la chambre haute pression 62 en communication avec la chambre basse pression 27.

Il est noté que l'orifice d'entrée haute pression 54, la chambre haute pression 62, le passage central longitudinal 44-1 de la tige de piston 44 ainsi que l'orifice de sortie basse pression 16 sont tous coaxiaux et centrés et alignés par rapport à l'axe central longitudinal A-A du régulateur de pression (l'axe longitudinal commun de l'enveloppe tubulaire 10 et du détendeur 25).

En fonctionnement le gaz haute pression entre par l'orifice d'entrée haute pression 54 et arrive dans la chambre haute pression 62. De cette chambre 62 il passe (à l'état ouvert du détendeur 25) par l'alésage central longitudinal 44-1 de la tige de piston 44 pour pénétrer dans la chambre basse pression 27. La pression de gaz dans la chambre basse pression 27 agit sur la tête de piston 46. Si la pression augmente dans la chambre basse pression 27, le piston 30 est déplacé en direction vers le siège de piston 56 par compression du ressort hélicoïdal 38. Le gaz quitte la chambre basse pression 27 par l'orifice de sortie basse pression convergent/divergent 16 et par les passages secondaires 82 qui produisent un effet de Venturi causant une réduction de la pression dans la chambre basse pression 27 qui assiste le mouvement d'ouverture du piston 30 et augmente le courant de gaz en vue de réduire la chute de pression, comme expliqué ci-avant.

Il est encore noté qu'une ouverture filetée 84 est pratiquée dans la partie principale 28-1 du corps 28. Cette ouverture 84 communique avec la chambre interne 36 du détendeur 24 et permet le raccordement d'une conduite (non-représentée) pour la connexion de la dépression de l'enceinte où se situe le filtre à air du moteur. L'ouverture 84 sert aussi pour raccorder un gaz à pression variable pour comprimer le ressort afin d'asservir le détendeur. Par ce moyen la pression de sortie est fonction de la pression injectée dans la chambre du ressort. L'avantage d'un tel système est qu'on peut compenser la chute de pression créée par de très gros débits comme les applications GNV (gaz naturel véhicule), pour les autobus, ou pour compenser la différence entre la pression dynamique et statique.

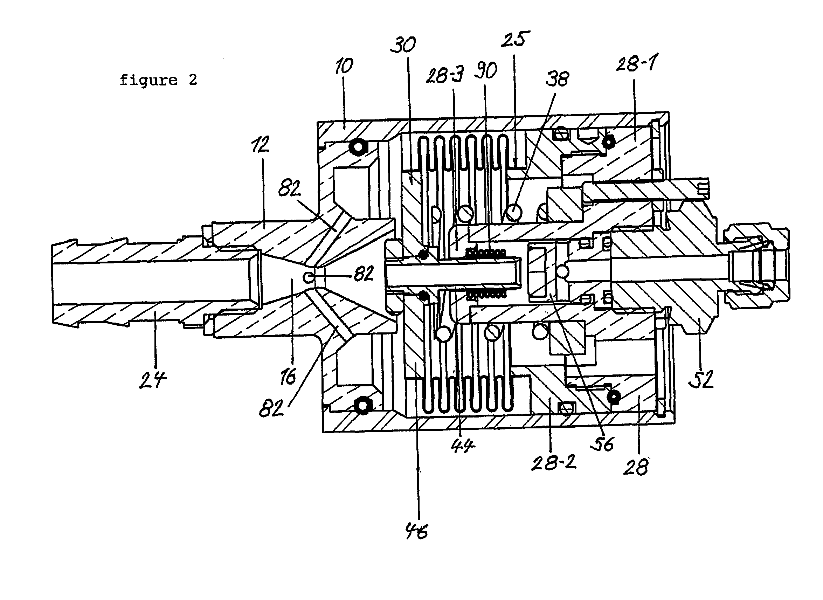

Tel que mentionné ci-avant, dans le mode d'exécution décrit le moyen d'étanchéité entre la tige de piston 44 et la partie de prolongement 34 du corps 28 comporte un joint torique en matière élastomère 70. Ce joint peut être approprié pour certaines applications mais pour d'autres applications, par exemple des applications cryogéniques ou UHP ce joint peut être remplacé par un second soufflet métallique 90, de préférence en inox, de petit diamètre disposé dans le prolongement 34 de la partie principale 28-1 du corps 28 du détendeur 25. Un mode d'exécution avec un tel second soufflet métallique 90 est représenté sur la figure 2. Ce second soufflet 90 est solidarisé de préférence par soudage au rayon laser, de l'un côté à la tige de piston 44 et de l'autre côté à une bague de support 28-3 solidaire du corps 28 et notamment du support raccord HP 28-1 de celui-ci et cette bague de support 28-3 est pourvue d'une ouverture centrale pour la tige de piston 44 dans laquelle cette tige de piston 44 est mobile.

Ce second soufflet métallique 90 a une meilleure résistance aux basses températures et permet d'obtenir une meilleure étanchéité que le joint élastomère classique 70 comme exigé par exemple, dans les applications Ultra Haute Pureté. Pour le reste, le mode d'exécution de la figure 2 est identique au mode d'exécution de la figure 1. Le second soufflet 90 peut aussi être utilisé pour les applications automobiles, cryogéniques ou les gaz corrosifs.

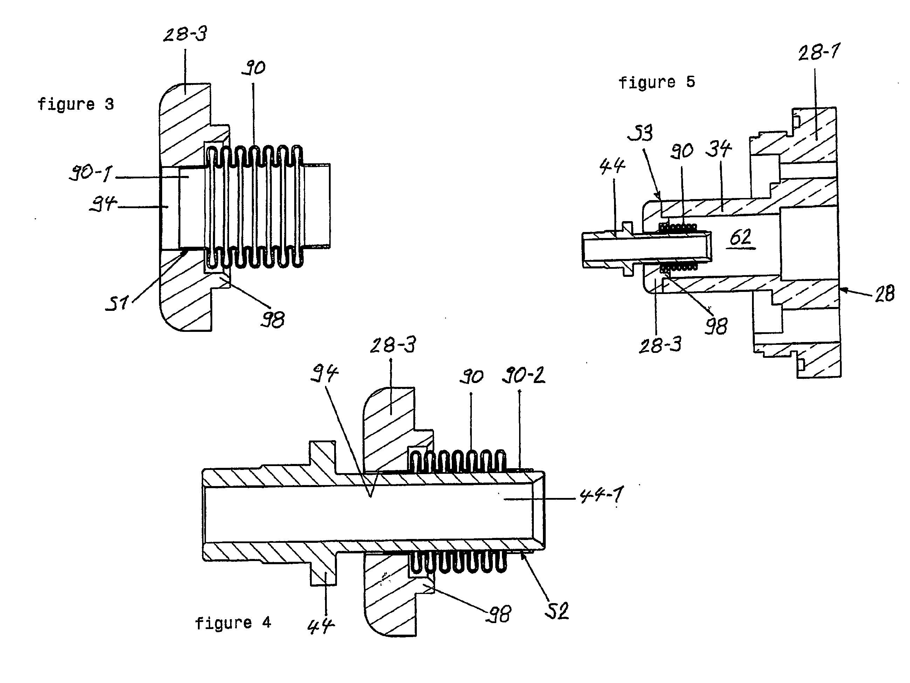

L'assemblage du second soufflet 90 avec la tige de piston 44 et la partie principale 28-1 du corps 28 du détendeur 25 sera maintenant expliqué en référence aux figures 3 à 5. Comme représenté sur la figure 3, le soufflet 90 est d'abord soudé à l'endroit S1 par soudage orbital au rayon laser à la bague de support 28-3. Pour préparer cette première étape de soudage une extrémité gauche non-ondulée 90-1 du soufflet 90 est d'abord introduite dans une ouverture centrale 94 de la bague de support 28-3. Ensuite le soufflet 90 est soudé à cet bague de support 28-3.

Pour préparer une deuxième étape de soudage, la tige de piston 44 est introduite à travers l'ouverture centrale 94 de la bague de support 28-3 et à travers le soufflet 90 (voir figure 4). Ensuite le soufflet 90 est comprimé en direction axiale et l'extrémité opposée droite non-ondulée 90-2 du soufflet 90 est soudée à l'endroit S2 par soudage orbital au rayon laser à la tige de piston 44.

Pour effectuer une troisième étape de soudage, la bague de support 28-3 est placée contre l'extrémité libre gauche de la partie du prolongement 34 du support raccord haute pression 28-1 de sorte que le soufflet 90 se trouve à l'intérieur du passage central longitudinal de ce support 28-1 (voir figure 5). La bague de support 28-3 est pourvue sur sa face interne d'une petite projection axiale 98 qui sert à centrer la bague de support 28-3 avec le soufflet 90 et la tige de piston 44 correctement par rapport à l'alésage longitudinal et l'axe longitudinal du détendeur 25. Lorsque la bague de support 28-3 est ainsi positionnée, le troisième soudage est exécuté à l'endroit S3 en vue de souder la bague de support 28-3 par soudage orbital au rayon laser au support 28-1. Après ce soudage la bague de support 28-3 et la partie 28-1 du corps du détendeur ne forment qu'une seule pièce. Le soufflet 90, étant soudé d'un côté à la tige de piston 44 et de l'autre côté à la bague de support 28-3 (c'est-à-dire le corps du détendeur 28) empêche toute fuite de gaz le long de l'extérieur de la tige de piston 44 vers la chambre interne 36 tout en permettant le mouvement axial de la tige de piston 44 par rapport au corps 28 du détendeur 25.

Alors que l'invention a été décrite ci-avant en grand détail par rapport à des modes d'exécution préférés, ces modes d'exécution ont été décrits seulement à titre illustratif et l'invention n'est nullement limitée à ces modes d'exécution particuliers. Au contraire, le spécialiste peut y apporter beaucoup de changements et de modifications sans pour autant quitter la portée des revendications annexées.

Par exemple, alors que l'invention a été décrite en combinaison avec un détendeur 25 en forme d'une unité modulaire autonome à insérer dans l'enveloppe tubulaire 10 et à retenir dans celle-ci par un anneau d'arrêt élastique 26, il va de soi que l'invention peut être utilisée avec n'importe quel autre moyen de détente de la pression du gaz.

## Revendications

1. Régulateur de pression de gaz, en particulier pour alimenter un moteur à combustion interne par un carburant gazeux sous pression constante, comportant :
un boîtier (10) ayant un orifice de sortie de gaz basse pression (16) en communication avec une chambre basse pression (27) délimitée dans le boitier;
un piston mobile (30) disposée dans le boîtier (10) et actionné en réponse à la pression du gaz, le piston coopérant avec un siège de piston (58) fixe en vue de régler le courant de gaz d'un orifice d'entrée haute pression vers la chambre basse pression (27);
**caractérisé en ce que**
l'orifice de sortie de gaz (16) a une forme convergente/divergente, et au moins un passage secondaire (82) est prévu entre la chambre basse pression (27) et l'orifice de sortie (16), l'entrée de ce passage secondaire étant en communication avec la chambre basse pression (27) en un endroit séparé de l'entrée de l'orifice de sortie (16) et la sortie du passage secondaire (82) débouchant dans l'orifice de sortie (16) à proximité de sa surface de passage minimale en vue de créer un effet de Venturi augmentant le flux du gaz quittant la chambre basse pression (27).

2. Régulateur de pression de gaz selon la revendication 1, dans lequel le passage secondaire (82) débouche dans l'orifice de sortie (16) en aval de la surface de passage minimal de l'orifice de sortie.

3. Régulateur de pression de gaz selon la revendication 1 ou 2, comportant plusieurs passages secondaires (82) espacés l'un de l'autre autour de l'orifice de sortie (16).

4. Régulateur de pression de gaz selon l'une quelconque des revendications 1 à 3, dans lequel le passage secondaire (82) est incliné par rapport à l'axe de l'orifice de sortie basse pression (16).

5. Régulateur de pression de gaz selon l'une quelconque des revendications 1 à 4, comportant un passage de gaz (44-1) recevant le courant de gaz réglé par la coopération du piston (30) avec le siège de piston (58), ce passage débouchant dans la chambre basse pression (27), l'axe de ce passage de gaz (44-1) étant aligné coaxialement avec l'axe de l'orifice de sortie convergent/divergent (16).

6. Régulateur de pression de gaz selon l'une quelconque des revendications 1 à 5, dans lequel l'orifice haute pression (54) est aligné coaxialement avec l'orifice de sortie (16).

7. Régulateur de pression de gaz selon la revendication 5, dans lequel la chambre basse pression (27) est délimitée en partie par le piston (30), ce piston ayant une tige de piston mobile (44) dans un alésage axial d'un support raccord haute pression (28-1) et un moyen d'étanchéité interne (70 ; 90) est disposé dans ledit support entre la tige de piston (44) et ledit support (28-1) pour empêcher une fuite de gaz haute pression autour de la tige de piston.

8. Régulateur de pression de gaz selon la revendication 7, dans lequel le moyen d'étanchéité comporte un joint torique (70) en matière élastomère.

9. Régulateur de pression de gaz selon la revendication 7, dans lequel le moyen d'étanchéité est formé par un soufflet métallique interne (90), par exemple en inox, disposé à l'intérieur dudit support (28-1) et solidarisé, de préférence par soudage au rayon laser, à la tige de piston (44) et audit support (28-1).

10. Régulateur de pression de gaz selon l'une quelconque des revendications 7 à 9, dans lequel un autre soufflet métallique externe (32), par exemple en inox, disposé à l'extérieur du support raccord haute pression (28-1), est solidarisé de l'un côté à une tête de piston (30) et de l'autre côté au support raccord haute pression (28-1).

11. Régulateur de pression de gaz selon la revendication 10, dans lequel le piston (30), le support raccord haute pression (28-1) avec le moyen d'étanchéité (70 ; 90) situé entre ces deux pièces, et le soufflet extérieur (32) font partie d'un détendeur unitaire autonome (25) à installer dans le boîtier (10) et à enlever de celui-ci en forme d'une unité indépendante encastrable.

12. Régulateur de pression de gaz selon la revendication 11, dans lequel le détendeur unitaire (25) est retenu dans le boîtier (10) par une bague élastique (26) en coopération avec le support raccord haute pression (28-1), sans la présence d'un moyen de fixation quelconque entre le support raccord haute pression (28-1) et le boîtier (10).

13. Régulateur de pression de gaz selon la revendication 12, dans lequel le boîtier (10) a la forme d'une enveloppe tubulaire fermée de l'autre côté par une paroi d'extrémité (18) pourvue de l'orifice de sortie basse pression (16) et fermée de l'autre côté par le support raccord haute pression (28-1), un raccord haute pression (52) pourvu de l'orifice d'entrée haute pression (54) étant fixé à ce support.

14. Régulateur de pression de gaz selon la revendication 13, dans lequel l'enveloppe tubulaire et le détendeur unitaire (25) ont un axe longitudinal central commun, et les axes de l'orifice de sortie basse pression (16), du passage de gaz du piston (44-1) et de l'orifice d'entrée haute pression (54) sont alignés et centrés sur cette axe central longitudinal.

## Claims

1. Gas pressure regulator, in particular for feeding an internal combustion engine with a gaseous fuel under constant pressure, comprising:
a housing (10) with an exit orifice for low pressure gas (16) in communication with a low pressure chamber (27) delimited in the housing;
a mobile piston (30) arranged in the housing (10) and actuated in response to the gas pressure, the piston cooperating with a fixed piston seat (58) in order to regulate the gas flow from a high pressure inlet to the low pressure chamber (27);
**characterised in that**
the gas exit orifice (16) has a convergent/divergent form, and at least a secondary passage (82) is provided between the low pressure chamber (27) and the exit orifice (16), the entry of this secondary passage being in communication with the low pressure chamber (27) at a place separated from the entry of the exit orifice (16) and
the exit of the secondary passage (82), discharging in the exit orifice (16) at proximity to the minimum passage cross-section in order to create a Venturi effect increasing the flow of gas leaving the low pressure chamber (27).

2. Gas pressure regulator according to claim 1, in which the secondary passage (82) discharges in the exit orifice (16) downstream the minimal passage cross-section of the exit orifice.

3. Gas pressure regulator according to claim 1 or 2, provided with several secondary passages (82) spaces from each other around the exit orifice (16).

4. Gas pressure regulator according to any one of claims 1 to 3, in which the secondary passage (82) is inclined with regard to the axis of the low pressure exit orifice (16).

5. Gas pressure regulator according to any one of claims 1 to 4, provided with a gas passage (44-1) receiving the flow of gas regulated by the cooperation of the piston (30) with the piston seat (58), this passage discharging in the low pressure chamber (27), the axis of this gas passage (44-1) being aligned coaxially with the axis of the convergent/divergent exit orifice (16).

6. Gas pressure regulator according to any one of claims 1 to 5, in which the high pressure orifice (54) is aligned coaxially with the exit orifice (16).

7. Gas pressure regulator according to claim 5, in which the low pressure chamber (27) is delimited partly by the piston (30), this piston having a mobile piston rod (44) in an axial bore of a supportive high pressure coupling (28-1) and an internal sealing means (70; 90) is disposed in said support between the piston rod (44) and said support (28-1) in order to avoid high pressure gas leakage around the piston rod.

8. Gas pressure regulator according to claim 7, in which the internal sealing means comprises an elastomeric o-ring (70).

9. Gas pressure regulator according to claim 7, in which the internal sealing means is formed by an internal metallic bellows (90), for example in stainless steel, disposed inside said support (28-1) and attached, preferably by laser beam welding, to the piston rod (44) and to said support (28-1).

10. Gas pressure regulator according to any one of claims 7 to 9, in which another external metallic bellows (32), for example in stainless steel, disposed outside of the supportive high pressure coupling (28-1), is attached at one side to a head of the piston (30) and at the other side to the supportive high pressure coupling (28-1).

11. Gas pressure regulator according to claim 10, in which the piston (30), the supportive high pressure coupling (28-1) with the sealing means (70; 90) disposed between these two parts, and the external bellows (32) are part of a unitary autonomous pressure reducer (25) to be installed in the housing (10) and to be removed there from as an independent installable unit.

12. Gas pressure regulator according to claim 11, in which the unitary pressure reducer (25) is retained in the housing (10) by an elastic ring (26) in cooperation with the supportive high pressure coupling (28-1), without the presence of any fastening means between the supportive high pressure coupling (28-1) and the housing (10).

13. Gas pressure regulator according to claim 12, in which the housing (10) has a form of a tubular envelope closed at the other side by an end wall (18) provided with the low pressure exit orifice (16) and closed at the other side by the supportive high pressure coupling (28-1), a high pressure coupling (52) being equipped with the high pressure inlet (54) and attached to this support.

14. Gas pressure regulator according to claim 13, in which the tubular envelope and the unitary pressure reducer (25) have a common central longitudinal axis, and the axes of the low pressure exit orifice (16), of the gas passage of the piston (44-1) and of the high pressure inlet (54) are aligned and centred on that central longitudinal axis.

## Patentansprüche

1. Gasdruckregler, insbesondere zur Versorgung eines internen Verbrennungsmotors mit einem gasförmigen Treibstoff unter konstantem Druck, welcher Folgendes umfasst:
ein Gehäuse (10), welches eine Niederdruckgas-Ausgangsöffnung (16) umfasst, welche in Verbindung mit eine Niederdruckkammer (27) steht, die von dem Gehäuse umgrenzt ist;
ein beweglicher Ventilkolben (30), welcher in dem Gehäuse (10) angeordnet ist und
in Antwort des Gasdrucks betätigt wird, wobei der Ventilkolben mit einem fixen Ventilkolbensitz (58) zur Reglung des Gasstroms von einer Hochdruck-Eingangsöffnung in die Niederdruckkammer (27) zusammenwirkt;
**dadurch gekennzeichnet, dass**
die Gas-Ausgangsöffnung (16) eine konvergente/divergente Form aufweist und zumindest eine sekundäre Passage (82) zwischen der Niederdruckkammer (27) und der Ausgangsöffnung (16) vorgesehen ist, wobei der Eingang dieser sekundären Passage in Verbindung mit der Niederdruckkammer (27) ist in einem Ort, welcher von dem Eingang der Ausgangsöffnung (16) und des Ausgangs der sekundären Passage (82) beabstandet ist, wobei die Passage in die Ausgangsöffnung (16) in der Nähe deren minimalen Durchgangsoberfläche zur Erzeugung eines Venturi-Effekts, der den Gasfluss, welcher die Niederdruckkammer (27) verlässt, vergrößert, mündet.

2. Gasdruckregler gemäß Anspruch 1, in dem die sekundäre Passage (82) stromabwärts der minimalen Durchgangsoberfläche der Ausgangsöffnung in die Ausgangsöffnung (16) mündet.

3. Gasdruckregler gemäß Anspruch 1 oder 2, welcher mehrere sekundäre Passagen (82) umfasst, die jeweils voneinander um die Ausgangsöffnung (16) herum beabstandet sind.

4. Gasdruckregler gemäß einem der Ansprüche 1 bis 3, in dem die sekundäre Passage (82) gegenüber der Achse des Niederdruckausgangs (16) geneigt ist.

5. Gasdruckregler gemäß einem der Ansprüche 1 bis 4, welcher eine Gas-Passage (44-1) umfasst, die den durch das Zusammenwirken des Ventilkolbens (30) und des Ventilkolbensitzes (58) geregelten Gasstrom empfängt, wobei die Passage in die Niederdruckkammer (27) mündet und die Achse der Gas-Passage (44-1) koaxial zu der Achse der konvergenten/divergenten Ausgangöffnung (16) ausgerichtet ist.

6. Gasdruckregler gemäß einem der Ansprüche 1 bis 5, in dem die Hochdrucköffnung (54) koaxial zu der Ausgangsöffnung (16) ausgerichtet ist.

7. Gasdruckregler gemäß Anspruch 5, in dem die Niederdruckkammer (27) teilweise durch den Ventilkolben (30) begrenzt ist, wobei der Ventilkolben einen beweglichen Kolbenschaft (44) in einer axialen Bohrung eines Hochdruckanschlussstück-Trägers (28-1) aufweist und eine internes Mittel zur Abdichtung (70 ; 90) in dem Träger zwischen dem Ventilkolbenschaft (44) und der Auflage (28-1) zur Vermeidung des Entweichens des Hochdruckgases um den Schaft des Ventilkolbens aufweist.

8. Gasdruckregler gemäß Anspruch 7, in dem das Mittel zur Abdichtung einen O-Ring (70) aus elastomeren Material umfasst.

9. Gasdruckregler gemäß Anspruch 7, in dem das Mittel zur Abdichtung durch einen internen Metallbalg (90) gebildet ist, zum Beispiel aus Edelstahl, der im Inneren des Trägers (28-1) angeordnet ist und vorzugsweise durch Laserschweißen mit dem Schaft des Ventilkolbens (44) und dem Träger (28-1) verbunden ist.

10. Gasdruckregler gemäß einem der Ansprüche 7 bis 9, in dem ein anderer externer Metallbalg (32), zum Beispiel aus Edelstahl, am Äußeren des Hochdruckanschlussstück-Trägers (28-1) angeordnet ist und auf einer Seite an einen Kopf des Ventilkolbens (30) und auf der anderen Seite mit dem Hochdruckanschlussstück-Träger (28-1) verbunden ist.

11. Gasdruckregler gemäß Anspruch 10, in dem der Ventilkolben (30), der Hochdruckanschlussstück-Träger (28-1) mit dem Mittel zur Abdichtung (70 ; 90), welches zwischen diesen beiden Teilen angeordnet ist, und der äußere Balg (32) einen Teil eines einheitlichen unabhängigen Druckminderes bilden zur Installation in dem Gehäuse (10) und zum Ausbau desselben in Form einer unabhängigen einbaubaren Einheit.

12. Gasdruckregler gemäß Anspruch 11, in dem der einheitliche Druckminderer (25) in dem Gehäuse (10) durch eine elastische Hülse (26) zusammenwirkend mit dem Hochdruckanschlussstück-Träger (28-1) gehalten wird, ohne die Anwesenheit irgendeines Befestigungsmittels zwischen der Hochdruckanschlussstück-Trägers (28-1) und dem Gehäuse (10).

13. Gasdruckregler gemäß Anspruch 12, in dem das Gehäuse (10) die Form einer röhrenartigen Hülle besitzt, welche an der anderen Seite durch eine Abschlusswand (18) abgeschlossen ist, welche die Niederdrucköffnung (16) umfasst und an der anderen Seite durch den Hochdruckanschlussstück-Träger (28-1) abgeschlossen ist, wobei ein Hochdruckanschlussstück (52) eine Hochdruck-Eingangsöffnung (54) umfasst und an dem Träger fixiert ist.

14. Gasdruckregler gemäß Anspruch 13, in dem die röhrenförmige Hülle und der einheitliche Druckminderer (25) eine gemeinsame longitudinale zentrale Achse aufweisen und die Achsen der Niederdruck-Ausgangsöffnung (16), der Gas-Passage des Ventilkolbens (44-1) und der Hochdruck-Eingangsöffnung (54) entlang der zentralen longitudinalen Achse ausgerichtet und zentriert sind.
